# EUROPÄISCHE PATENTANMELDUNG

(11) **EP 3 130 908 A1**
(43) Veröffentlichungstag der Anmeldung: **15.02.2017**
(21) Anmeldenummer: 15002374.5
(22) Anmeldetag: 10.08.2015
(51) Int. Cl.: G01N 3/08

(54) **TESTAPPARATUR MIT TORSION**

(71) Anmelder: THELKIN AG, 8406 Winterthur (CH)
(72) Erfinder: Baier, Jens, 78465 Konstanz (DE); Gnepf, Patric, 8400 Winterthur (DE); Ammann, Johannes B., 9215 Schönenberg (CH); Schwenke, Thorsten, 8409 Winterthur (CH)
(74) Vertreter: Willy, Otto Martin

(57) **Zusammenfassung**

Die vorliegende Erfindung betrifft eine Testapparatur (1) zum Prüfen einer Probe durch mechanische Einwirkung auf die Probe, umfassend einen Probenbereich (2) innerhalb eines Lastrahmens (3) und mindestens einen Linearantrieb (4, 4'), welcher ausserhalb des Probenbereichs (2) angeordnet ist. Die Testapparatur umfasst weiter einen Rotationsantrieb (5), welcher ausserhalb des Probenbereichs (2) angeordnet ist und einen Zylinder (6), welcher relativ zum Probenbereich (2) entlang seiner Längsachse mittels des mindestens einen Linearantriebs (4, 4') linear und beweglich ist, und mittels des Rotationsantriebs (5) um seine Längsachse rotierbar beweglich ist, und wobei sich der Zylinder (6) von ausserhalb des Probenbereichs (2) in den Probenbereich (2) erstreckt und dabei durch den Lastrahmen (3) geführt wird. Die Erfindung betrifft weiter ein Verfahren zum Prüfen einer Probe durch mechanische Einwirkung.

## Beschreibung

### Technisches Gebiet

Die Erfindung betrifft eine Testapparatur zum Prüfen einer Probe durch mechanische Einwirkung auf diese sowie ein entsprechendes Verfahren zum Prüfen von Proben; alles gemäss den Oberbegriffen der unabhängigen Ansprüche.

### Stand der Technik

Testapparaturen zur mechanischen Prüfung von Proben werden in der industriellen und universitären Forschung und Entwicklung standardgemäss eingesetzt, bspw. zur Materialprüfung oder in Belastungs-, Ermüdungs- und Abnutzungstests. Solche Testapparaturen verfügen in ihrer einfachsten Ausgestaltung über einen Probenbereich, in dem die entsprechende zu prüfende Probe der Einwirkung mechanischer Kräfte ausgesetzt werden kann. Oft verfügen diese Geräte zudem über Mittel und Wege, um die ausgeübten Kräfte, die Belastungsdauer und/oder die Frequenzen der Krafteinwirkung einzustellen.

In der EP 2 498 077 A1 (Schwenke, T; Winterthur, CH) wird eine solche Testapparatur beschrieben. Die Apparatur setzt einen Zylinder ein, welcher mechanisch auf eine Probe in einem Probenbereich einwirkt, indem er relativ zu diesem beweglich ist. Dazu dienen zwei Linearantriebe, welche mittels einer Brücke miteinander und mit dem Zylinder wirkverbunden sind. Ein starrer Lastrahmen mit einem Lagermodul definiert den Probenraum und führt den Zylinder in diesen. Dadurch wird der Bau einer kompakten Testapparatur ermöglicht, welche insgesamt mit wenig Wartungsaufwand über einen langen Zeitraum betrieben werden kann.

Für besondere Proben sind neben linearen Anpresskräften auch andere mechanische Einwirkungen dem Belastungstest zuzufügen. So kann es beispielsweise für den medizinaltechnischen Bereich erforderlich sein, dass neben einer linearen Belastung auch die Auswirkung von Torsionskräften oder Drehmomenten auf die Probe getestet werden. Ein solcher Aufbau lässt sich bewerkstelligen, indem z. B. eine Probe im Probenbereich fixiert und zunächst einer mechanischen Einwirkung über einen Zylinder, wie oben beschrieben, ausgesetzt wird. Eine zusätzliche Torsion auf die Probe kann erzeugt werden, indem die Grundlage, auf welcher die Probe fixiert wird, rotiert wird. Dadurch können Testumgebungen erzeugt werden, bei welchen bidirektional je ein linearer Anpressdruck und eine Torsion auf eine Probe eingewirkt werden können. Ein solcher Aufbau ist allerdings weniger kompakt als die oben geschilderte Testapparatur und besonders für Tests, welche in bestimmten Umgebungen durchgeführt werden müssen, umständlich.

Es ist somit eine Aufgabe der vorliegenden Erfindung, eine dem eingangs geschilderten technischen Gebiet zugehörige Testapparatur bereitzustellen, welche mindestens einen Nachteil des Bekannten überwindet. Insbesondere soll eine Testapparatur bereitgestellt werden, welche einfach zu bedienen sowie kompakt, ist und mit einem geringen Wartungsaufwand betrieben werden kann.

### Darstellung der Erfindung

Diese Aufgabe wurde mit einer Testapparatur und einem entsprechenden Verfahren gelöst, gemäss kennzeichnendem Teil der unabhängigen Ansprüche.

Ein Aspekt der vorliegenden Erfindung betrifft eine Testapparatur zum Prüfen einer Probe durch mechanische Einwirkung auf diese. Die erfindungsgemässe Testapparatur umfasst einen Probenbereich innerhalb eines Lastrahmens. Sie umfasst weiter mindestens einen Linearantrieb, welcher ausserhalb des Probenbereichs angeordnet ist, und einen Rotationsantrieb, welcher ebenfalls ausserhalb des Probenbereichs angeordnet ist. Die erfindungsgemässe Testapparatur umfasst zudem einen Zylinder, welcher relativ zum Probenbereich entlang seiner Längsachse mittels des mindestens einen Linearantriebs linear und beweglich ist. Der Zylinder ist zudem mittels des Rotationsantriebs um seine Längsachse rotierbar beweglich. Der Zylinder erstreckt sich von ausserhalb des Probenbereichs in den Probenbereich und wird dabei durch den Lastrahmen geführt.

Mit der erfindungsgemässen Testapparatur wird eine solche bereitgestellt, bei der es nicht länger erforderlich ist, eine komplexe Elektronik zusätzlich zu den montierten Linearantrieben an einem anderen Ort der Testapparatur unterzubringen. So können mit der erfindungsgemässen Testapparatur sowohl die lineare Anpresskraft als auch die Torsion unidirektional, d. h. aus der gleichen Richtung über den Zylinder, auf die Probe eingewirkt werden. Durch diesen Aufbau sind zudem andere Vorteile denkbar. Unter anderem wäre es in einer beispielhaften Ausführungsform möglich, dass Proben, die besonderer Umgebungen bedürfen, unter hygienischeren und sichereren Bedingungen getestet werden können. Insbesondere medizinaltechnische Implantate und Werkzeuge, welche einer Materialprüfung oder eines Belastungstests bedürfen, müssen diesen unter physiologischen Bedingungen durchführen. Dies setzt voraus, dass der Test z. B. in einer temperierten physiologischen Kochsalzlösung oder einem Gewebesurrogat durchgeführt wird. Es versteht sich von selbst, dass unter solchen Bedingungen das Anbringen einer zusätzlichen aus einer anderen Richtung stammenden Torsionskraft auf die Probe umständlich und mit hygienischen und/oder baulichen Problemen behaftet ist. Mit der beispielhaft genannten Ausführungsform der vorliegenden Erfindung lässt sich eine Testapparatur realisieren, bei der lediglich ein Zylinder in den Probenraum und in die Anordnung mit der physiologischen Kochsalzlösung hinein erstreckt werden muss, um die Probe angemessen und nach medizinaltechnisch erforderlichen Massstäben zu testen.

Als weiterer Vorteil wäre denkbar, dass alle potentiell kontaminierenden Elemente, bei welchen Schmiermittel oder Hydraulikflüssigkeiten angewendet werden können, wie z. B. der Rotationsantrieb oder der mindestens eine Linearantrieb, im gleichen Bereich der Gesamttestapparatur untergebracht sind. Dadurch lässt sich dieser Bereich besonders für hygienetechnisch heikle Proben mit besonderer Sorgfalt hermetisch isoliert ausgestalten.

Durch die räumliche Anordnung der Antriebe im gleichen Bereich der Testapparatur kann als weiterer möglicher Vorteil auch die Wartung durch die Zugänglichkeit dieser Elemente vereinfacht werden.

Im Sinne der vorliegenden Erfindung sei als ein Zylinder ein für die Übertragung der Kraft durch die Antriebe auf die Probe geeigneter mechanischer Körper verstanden, der sich entlang einer Z-Achse erstreckt und in der X-Y-Ebene einen geeigneten Querschnitt aufweist. Dieser Querschnitt kann rund, oval, viereckig oder mehreckig sein, ist aber vorzugsweise kreisförmig. Der Zylinder kann in einer besonderen Ausführungsform hohl ausgestaltet sein, ist aber auch als ausgefüllter Zylinder denkbar.

Im Sinne der vorliegenden Erfindung kann unter einem Linearantrieb ein Antriebssystem verstanden werden, welches in der Lage ist, eine translatorische Bewegung durchzuführen. Bevorzugt findet diese translatorische Bewegung in Richtung einer Längsachse statt, welche parallel zur Längsachse des Zylinders ist.

In einer besonderen Ausführungsform, bei der der Zylinder in der X-Y-Ebene einen kreisförmigen Querschnitt aufweist, verläuft die Längsachse des Zylinders durch den Mittelpunkt der besagten Querschnittsfläche. Besonders bevorzugt ist die Längsachse zugleich die Rotationsachse des Zylinders.

In einer besonderen Ausführungsform ist der Rotationsantrieb ein Antrieb, welcher geeignet ist, den Zylinder in eine Rotationsbewegung um die eigene Längsachse zu versetzen, insbesondere soll vom Rotationsantrieb ein Drehmoment auf den Zylinder übertragbar sein.

In einer besonderen Ausführungsform wird der Zylinder von ausserhalb des Probenbereichs durch den Lastrahmen hindurchgeführt. Unter einer Führung kann im Sinne der vorliegenden Erfindung insbesondere eine kontaktschlüssige Führung verstanden werden.

In einer besonders bevorzugten Ausführungsform umfasst eine Führung im Sinne der vorliegenden Erfindung eine Lagerung. Diese soll insbesondere sicherstellen, dass die Bewegung in die gewünschte Richtung kontrolliert und begrenzt möglich ist.

In einer besonderen Ausführungsform verläuft eine Bewegungsachse des mindestens einen Linearantriebs parallel zur Längsachse des Zylinders.

In einer besonderen Ausführungsform ist der mindestens eine Linearantrieb starr mit dem Lastrahmen verbunden und umfasst einen Bewegungskolben, der entsprechend parallel zur Längsachse des Zylinders linear bewegbar ist. Dieser Kolben ist bevorzugt mit dem Zylinder wirkverbunden, oder kann mit diesem wirkverbunden werden.

In einer besonderen Ausführungsform sind mindestens zwei Linearantriebe vorgesehen. Die Testapparatur umfasst dann mindestens eine Brücke, über welche die Linearantriebe miteinander in Wirkverbindung stehen. Bevorzugt ist der Zylinder durch die Brücke geführt.

In einer besonders bevorzugten Ausführungsform kann der Zylinder weiter mit der Brücke in Wirkverbindung gebracht werden. Die Brücke ist so ausgestaltet, dass sie die Kraft, welche aus den Linearantrieben in eine translatorische Bewegung derselben entlang der Längsachse des Zylinders eingesetzt wird, auf diesen zu übertragen vermag. Dies kann z. B. dadurch bewerkstelligt werden, dass die Brücke über einen Flansch verfügt, der mit einer entsprechenden Ausnehmung am Umfang des Zylinders in Wirkverbindung gebracht werden kann.

In einer besonderen Ausführungsform verfügt der Zylinder über eine Bajonettnut, welche mit einem entsprechenden Stift oder Flansch der Brücke in Wirkverbindung gebracht werden kann. So kann z. B. zwischen dem Zylinder und der Brücke ein Formschluss ausgestaltet sein, insbesondere eine Selbsthemmung zwischen Zylinder und Brücke ausgestaltet sein.

In einer besonderen Ausführungsform ist der mindestens eine Linearantrieb ein Antrieb, ausgewählt aus der Gruppe bestehend aus: elektromagnetischen Motoren, servo-elektrischen Motoren, piezoelektrischem Motor, magnetorestriktivem Motor, Hydraulikzylinder und/oder Pneumatikzylinder.

Besonders bevorzugt handelt es sich beim Linearmotor um einen servo-elektrischen Linearmotor.

In einer besonderen Ausführungsform wird jeder Linearantrieb und der Rotationsantrieb einzeln über je eine Antriebssteuerung gesteuert. Bevorzugt werden alle Antriebssteuerungen der erfindungsgemässen Testapparatur über eine gemeinsame Regelung gesteuert.

Durch getrennte Steuerungen könnten z. B. die Antriebe individuell gesteuert werden und auch individuell mit eventuell vorhandenen Regelkreisen und Sensoren interagieren. Mit einer gemeinsamen Regelung kann z. B. eine Synchronisation der entsprechenden Antriebe gewährleistet werden.

In einer besonderen Ausführungsform umfasst der Rotationsantrieb mindestens eine lineare Kugelführung.

In einer besonderen Ausführungsform umfasst der Torsionsantrieb eine Nutenstange zur Übertragung des Drehmoments auf den Zylinder. Die Nutenstange ist bevorzugt so im Torsionszylinder angebracht, dass sie frei der translatorischen Bewegung des Zylinders folgen kann. Sie ist bevorzugt weiter so ausgestaltet, dass sie mit dem erzeugten Drehmoment des Torsionsantriebs wirkverbunden werden kann und dieses auf den Zylinder zu übertragen vermag.

In einer besonderen Ausführungsform umfasst die erfindungsgemässe Testapparatur weiter eine Kupplung. Die Kupplung ist so ausgestaltet, dass sie den Zylinder lösbar in Wirkverbindung mit dem Rotationsantrieb zu setzen vermag. Sie kann zusätzlich oder alternativ ausgestaltet sein, um den Zylinder lösbar in Wirkverbindung mit dem mindestens einen Linearantrieb zu setzen.

In einer besonderen Ausführungsform ist die Kupplung oberhalb der Brücke angeordnet.

Im Sinne der vorliegenden Erfindung kann als oberhalb der Bereich definiert werden, der bei einem konventionellen Aufstellen der Maschine, bei dem z. B. ein Probenbereich unten angeordnet wäre und sich der Zylinder von oben in einen Probenbereich hinein erstreckt. In einer solchen Anordnung wäre die Brücke oberhalb des Probenbereichs, welcher durch den Lastrahmen begrenzt wird. Ein Zylinder könnte mittels einer Führung von ausserhalb und oberhalb des Probenbereichs sich in diesen hinein erstrecken.

In einer besonderen Ausführungsform umfasst der Lastrahmen zwei parallel angeordnete Träger. Besonders bevorzugt umfasst der Lastrahmen zudem an jedem der beiden Träger einen Flanschbereich, der sich in den Innenraum der Testapparatur erstreckt und jeweils vom gegenüberliegenden Flanschbereich beabstandet ist. Durch diesen Abstand wird der Zylinder in den durch den Flanschbereich und den jeweiligen Träger auf beiden Seiten begrenzten Probenbereich geführt. In dieser Ausführungsform umfasst der Lastrahmen zwei im Wesentlichen T-förmige Träger.

In einer besonderen Ausführungsform sind die Träger des Lastrahmens einstückig ausgebildet.

In einer alternativen Ausführungsform sind die Träger mehrstückig ausgebildet.

In einer besonderen Ausführungsform sind die Träger über eine Reihe von Traversen miteinander verbunden. Eine erste Traverse schliesst die Testapparatur unten ab und bildet den Boden des Probenbereichs. Eine zweite, oberhalb angebrachte Traverse definiert das Ende des Probenbereichs gegen oben. Durch diese Traverse könnte mittels einer Ausnehmung der Zylinder in den Probenbereich geführt sein. Die Linearantriebe können entweder auf dieser Traverse ruhen oder mit den Trägern starr verbunden sein. Eine dritte Traverse kann den Bereich der Testapparatur, in dem die Linearantriebe und die Brücke angeordnet sind, gegen oben abschliessen.

In einer besonders bevorzugten Ausführungsform ist auf der dritten Traverse der Rotationsantrieb montiert. Diese dritte Traverse verfügt ebenfalls über eine Ausnehmung, durch welche der Zylinder geführt ist, und durch welche das Drehmoment übertragen wird. Diese Ausnehmung wird ebenfalls bevorzugt gelagert, besonders bevorzugt ist diese Ausnehmung mit einem Kugellager versehen.

In einer besonderen Ausführungsform erstreckt sich der Zylinder durch die Brücke und durch eine Lagerung.

Besonders bevorzugt erstreckt sich der Zylinder durch eine Kugellagerung durch die Brücke, in welcher dieser rotierbar gelagert ist.

In einer besonderen Ausführungsform umfasst die erfindungsgemässe Testapparatur ein Lagermodul am Lastrahmen, durch welchen sich der Zylinder von ausserhalb des Probenbereichs in den Probenbereich erstreckt, und durch welchen der Zylinder geführt ist. Bevorzugt ist dieses Lagermodul auswechselbar ausgestaltet. Die Auswechselbarkeit kann z. B. so bewerkstelligt werden, dass das Lagermodul durch lösbare Schraub- oder Steckverbindungen am Lastrahmen befestigt ist. Alternativ kann das Lagermodul auch direkt am Lastrahmen als integraler Bestandteil ausgebildet sein.

In einer besonderen Ausführungsform umfasst die Testapparatur mindestens ein Sensorsystem, welches mit dem Zylinder gekoppelt ist. Im Sinne der vorliegenden Erfindung ist das Sensorsystem mit dem Zylinder gekoppelt, wenn durch den Betrieb von diesem Zylinder Messdaten an das Sensorsystem übertragbar sind.

In einer besonders bevorzugten Ausführungsform umfasst das Sensorsystem mindestens einen Sensor, ausgewählt aus der Gruppe bestehend aus: Dehnmessstreifen, inkrementalen Positionsgebern, kontinuierlichen Positionsgeber, Kraftsensoren, Hall-Sensoren, Spannungssensoren etc.

Mit den entsprechenden Sensoren ausgestattet, kann der Testvorgang überwacht werden. So kann z. B. überwacht werden, ob die vorschriftsgemässen Kräfte auf die Probe einwirken und/oder wie sich die Probe im jeweiligen Umfeld verhält. So können z. B. mittels Hall-Sensoren oder Spannungsmessern Veränderungen an der Integrität und/oder Struktur der Probe bereits im Testvorgang detektiert werden.

Das Messsystem kann in einer besonderen Ausführungsform dergestalt in der Testapparatur integriert sein, dass es mittels eines Prozessors eine direkte Auswertung der Daten ermöglicht. Weiter kann ein zusätzlicher Speicher vorhanden sein, um eine Historie der Messdaten zu erstellen.

In einer besonders bevorzugten Ausführungsform verfügt die Testapparatur über einen Anschluss, der sich mit einem weiteren Computer verbinden lässt. Über diesen Computer können die gemessenen Messdaten ausgewertet werden.

Umgekehrt lassen sich auch von Auswirkungen auf den Zylinder Schlüsse auf die Probe wirkenden Kräfte schliessen. So kann z. B. ein im Zylinder integrierter Dehnmessstreifen eine Verformung oder Stauchung des Zylinders messen und/oder detektieren.

In einer besonderen Ausführungsform sind mehrere Sensorsysteme in der Testapparatur vorgesehen. Besonders bevorzugt sind gewisse Messsysteme redundant oder parallel in mehrfacher Ausführung vorhanden.

In einer besonderen Ausführungsform ist die Testapparatur so ausgestaltet, dass eine Rückkoppelung zwischen den von den Messsystemen ermittelten Daten und von den Antrieben erzeugten Kräften besteht.

Alternativ ist es auch möglich, eine Testapparatur ohne Sensorsysteme zu betreiben. Es wäre z. B. möglich, eine Probe mit den entsprechenden Sensorsystemen auszustatten. So liesse sich z. B. eine bestimmte Testroutine kalibrieren. Eine Kalibrierprobe wird mit entsprechenden Messsystemen einer bestimmten Testroutine unterzogen, und die identische Testroutine mit den eingestellten Antriebskräften der Linear- und Rotationsantriebe würde dann auf die eigentliche Probe angewandt werden.

In einer bevorzugten Ausführungsform ist der Lastrahmen starr. Im Sinne der vorliegenden Erfindung kann unter einem starren Lastrahmen ein Lastrahmen verstanden werden, der gegenüber den von den Antrieben erzeugten Kräften verwindungssteif und verformungsstabil ist. Bevorzugt ist der Lastrahmen zudem so ausgestaltet, dass er eine stabile und inerte Umgebung für den durchzuführenden Probenprozess ermöglicht.

In einer besonderen Ausführungsform ist der Lastrahmen dergestalt starr, dass er keine Vibrationen, welche durch den Testvorgang entstehen, nach aussen überträgt.

In einer alternativen besonderen Ausführungsform ist die Testapparatur mit einer Federung ausgestaltet, welche die Vibrationen der Testverfahren im Wesentlichen absorbiert.

In einer besonderen Ausführungsform ist der starre Lastrahmen nicht verstellbar ausgestaltet. Dies ermöglicht eine einfachere Struktur des Lastrahmens bei gleichzeitig hoher Steifigkeit.

In einer besonderen Ausführungsform ist der Probenbereich hermetisch verschliessbar. Bevorzugt ist der Probenbereich so ausgestaltet, dass er staub-, wasser- und im Wesentlichen gasdicht ist.

In einer besonderen Ausführungsform umfasst die erfindungsgemässe Testapparatur eine Traverse, welche so angeordnet ist, dass sie sich zwischen zwei parallel angeordneten Seitenwänden des Lastrahmens erstreckt und oberhalb der Brücke angeordnet ist. Bevorzugt ist die Traverse starr mit dem Lastrahmen verbunden.

In einer besonderen Ausführungsform ist der Linearantrieb ausgelegt, um eine Kraft von 1 bis 7'000 N auf eine Probe im Probenbereich auszuüben, bevorzugt von 200 bis 6'000 N, besonders bevorzugt von 500 bis 5'000 N.

In einer besonderen Ausführungsform ist die Traverse integraler Bestandteil des Lastrahmens. Alternativ kann die Traverse mit dem Lastrahmen fest montiert sein, z. B. durch Schraubverbindungen oder durch stoffschlüssige Verbindungen, wie z. B. Löten und/oder Schweissen.

In einer alternativen Ausführungsform ist die Traverse entlang des Lastrahmens verschiebbar angebracht. Bevorzugt ist auch die Brücke verschiebbar angebracht. In dieser Ausführungsform lässt sich der Probenraum in seinem Volumen skalieren, indem die Traverse entlang der Längsachse des Zylinders verschoben wird.

In einer besonderen Ausführungsform ist der Rotationsantrieb mit der Traverse starr verbunden. Im Sinne der vorliegenden Erfindung ist der Rotationsantrieb z. B. mit der Traverse starr verbunden, wenn durch den Rotationsantrieb erzeugte Kräfte, also z. B. das Drehmoment, das auf den Zylinder wirkt, zu keiner Verformung, Dehnung und/oder Stauchung der Traverse oder ihrer Verbindung mit dem Lastrahmen führt. Somit kann eine vollständige Kraftübertragung des Drehmoments auf den Zylinder bewerkstelligt werden. Der Rotationsantrieb kann zu diesem Zweck mit der Traverse verschraubt, verschweisst oder anderweitig kraftschlüssig verbunden sein. In dieser Ausführungsform kann der Rotationsantrieb von ausserhalb des Lastrahmens durch die besagte Traverse ein Drehmoment auf den Zylinder übertragen. Die Traverse weist eine entsprechende Ausnehmung auf, durch welche sich der Zylinder erstrecken kann. Die Ausnehmung ist bevorzugt mit einer Lagerung versehen.

Vorteilhafterweise ist die Testapparatur als Tischmodell ausgebildet, welches auf handelsüblichen Labortischen eingesetzt werden kann.

In einer besonderen Ausführungsform ist die Testapparatur kleiner als ein Kubus mit einer Kantenlänge von 1,5 Metern und überschreitet nicht ein Gewicht von 150 kg.

Für einen Fachmann versteht es sich von selbst, dass sämtliche aufgeführte besondere Ausführungsformen in einer erfindungsgemässen Testapparatur in einer beliebigen Kombination verwirklicht sein können, sofern sie sich nicht gegenseitig ausschliessen.

Ein weiterer Aspekt der vorliegenden Erfindung betrifft ein Verfahren zum Prüfen von Proben durch mechanisches Einwirken auf diese. Das erfindungsgemässe Verfahren umfasst die folgenden Schritte: Einbringen der zu prüfenden Probe in einen Probenbereich einer Testapparatur. Der Probenbereich kann in einer erfindungsgemässen Testapparatur so ausgestaltet sein, dass er von aussen zugänglich ist. Dazu kann der Probenbereich z. B. mit einem Schacht, einer Öffnung oder einer Schiebetür oder Ähnlichem so ausgestaltet sein, dass ein Anwender Proben im Probenbereich anbringen und handhaben kann.

Das erfindungsgemässe Verfahren umfasst weiter den Schritt: kraftschlüssiges Verbinden der Probe mit einem starren Lastrahmen der Testapparatur. Zu diesem Zweck kann z. B. der Boden des Probenbereichs mit entsprechenden Befestigungen vorgesehen sein. Es ist auch möglich, einen entsprechenden Boden mitsamt der Probe in den Probenbereich einzulegen und entsprechend zu fixieren. Einem Fachmann sind Möglichkeiten, eine Probe in einem Probenbereich zu fixieren, hinlänglich bekannt. Denkbar wären z. B. kraftschlüssige Verbindungen, wie Klemm- und/oder Schraubverschlüsse, Gewinde etc.

Das Verfahren umfasst zudem den Schritt des Verschiebens des Zylinders in der Längsachse des Zylinders und/oder Rotieren des Zylinders um die Längsachse desselben zur Ausübung einer mechanischen Kraft auf die Probe. Zu diesem Zweck kann der Zylinder zunächst in Kontakt mit der Probe gebracht werden.

In einer besonderen Ausführungsform werden im erfindungsgemässen Verfahren das Verschieben des Zylinders in der Längsachse und das Rotieren des Zylinders um diese separat gesteuert. In dieser Ausführungsform kann ein Regler vorgesehen sein, um je einen der beiden oder beide Antriebe in einer fixen Position zu halten, während der andere seine Kraft ausübt. Konkret bedeutet dies, dass der Zylinder ein Drehmoment übertragen kann, ohne dazu eine translatorische Bewegung durchführen zu müssen und umgekehrt. Mit einer solchen Anordnung lassen sich sehr komplexe Testmodelle vergleichsweise einfach aufbauen.

In einer besonderen Ausführungsform, wobei der Zylinder durch ein Kugellager von ausserhalb des Lastrahmens in den Probenbereich geführt ist, umfasst das Verfahren weiter den Schritt: Kopplung eines Drehmoments von einem Rotationsantrieb auf den Zylinder, um diesen um seine Längsachse zu rotieren.

In einer besonderen Ausführungsform wird die Probe kraftschlüssig mit einem Rand des Probenbereichs verbunden, und der Zylinder übt dann mechanisch Kraft auf die Probe aus. In einer besonderen Ausführungsform wird der Zylinder durch die Antriebe bewegt, insbesondere durch die Linearantriebe in Längsrichtung und durch den Rotationsantrieb mit einem Drehmoment versehen. Bevorzugt wird mehr als ein Linearantrieb verwendet. Dadurch kann z. B. die Kraft auf mehrere Antriebe verteilt und gleichmässiger auf die Probe eingewirkt werden.

In einer bevorzugten Ausführungsform sind alle Antriebe synchronisiert und üben die mechanische Kraft auf die Probe synchron aus.

In einer besonderen Ausführungsform sind die Antriebe so ausgestaltet, dass die mechanischen Kräfte schrittweise erhöht oder gesenkt werden können und/oder kontinuierlich erhöht oder gesenkt werden können.

In einer besonderen Ausführungsform wird die Kraft gepulst ausgeübt, d. h. in einer bestimmten Frequenz. Entsprechend kann die Frequenz über eine Steuerzentrale eingestellt werden.

In einer besonderen Ausführungsform dient die Kupplung dazu, zwischen den Linearantrieben und dem Rotationsantrieb zu alternieren. Dieses Alternieren kann ebenfalls gepulst und in einer bestimmten Frequenz erfolgen.

Mit der vorliegenden Erfindung werden somit eine Testapparatur und ein entsprechendes Verfahren zur Verfügung gestellt, mit welchem sich insbesondere für den medizintaltechnischen Bereich Proben mit mechanischer Krafteinwirkung auf effiziente Weise testen lassen.

Aus der folgenden Detailbeschreibung und der Gesamtheit der Patentansprüche ergeben sich weitere vorteilhafte Ausführungsformen und Merkmalskombinationen der vorliegenden Erfindung.

Insbesondere wird im folgenden Abschnitt anhand von Zeichnungen und konkreten Ausführungsbeispielen die Erfindung näher erläutert, ohne allerdings auf diese beschränkt zu sein.

### Kurze Beschreibung der Zeichnungen

Die zur Erläuterung des Ausführungsbeispiels verwendeten Zeichnungen zeigen:
- Fig. 1a: Eine schematische Schrägansicht einer erfindungsgemässen Testapparatur;
- Fig. 1b: eine schematische Frontansicht einer erfindungsgemässen Testapparatur, und
- Fig. 2: eine schematische Darstellung einer Brücke einer erfindungsgemässen Testapparatur mit den Antrieben.

Grundsätzlich sind in den Figuren gleiche Teile mit gleichen Bezugszeichen versehen, sofern es nicht explizit anders geschildert wird

### Wege zur Ausführung der Erfindung

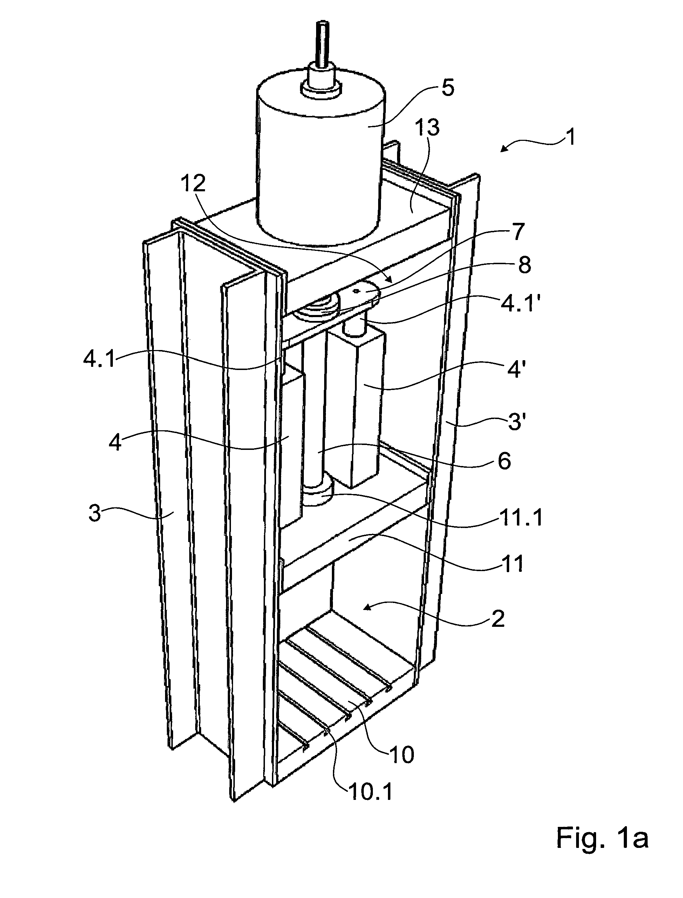

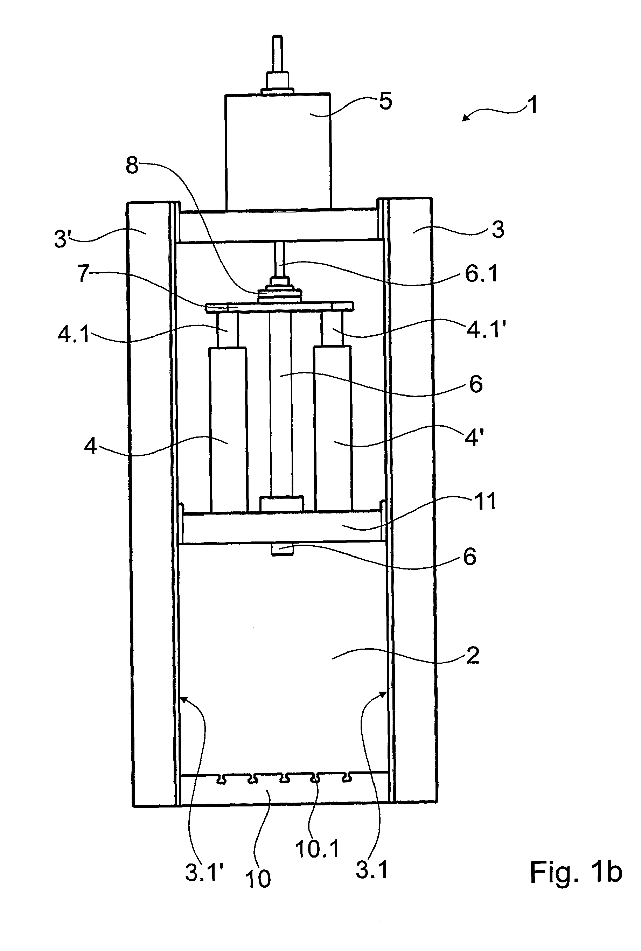

In der Fig. 1 ist schematisch eine perspektivische Ansicht einer erfindungsgemässen Testapparatur 1 dargestellt. Die Testapparatur 1 kann zusätzlich mit einer Umschalung versehen sein, welche in der Figur nicht gezeigt ist. So können z. B. die bewegbaren Teile mit einem Mantel versehen sein, um einerseits die Lager und Getriebe zu schützen und andererseits eine Verletzungsgefahr zu minimieren. Die gesamte in der Fig. 1 gezeigte Testapparatur 1 kann mit einer Umschalung ausgestattet werden, sodass lediglich der Probenbereich 2 von aussen zugänglich ist. Wahlweise kann auch der Probenbereich 2 mit einer Umschalung vorgesehen sein, welche sich z. B. zur Einführung der Probe abnehmen und/oder öffnen lässt. Ebenfalls denkbar wäre es, den Probenbereich 2 offen und von aussen zugänglich auszugestalten. Bevorzugt wäre der Probenbereich allerdings mit einer transparenten Umschalung ausgestattet, wie z. B. mit einem Plexiglasfenster, sodass der Testprozess von aussen überwacht werden kann. Die Umschalung kann aus Kunststoff oder Metall sein, wobei besonders Aluminium wegen des vergleichsweise leichten Gewichts, bei gleichzeitig ausreichender Stabilität und Inertheit gegenüber chemischen und physikalischen Einflüssen günstig ist.

In der beispielshaft gezeigten Testapparatur 1 ist der Probenbereich 2 in Bezug auf die Gesamtausmasse der Testapparatur 1 unten angeordnet und wird durch eine Bodentraverse 10 begrenzt. In der Bodentraverse 10 sind Ausnehmungen in der Form von Nuten 10.1 vorgesehen. Diese Nuten 10.1 können zur kraftschlüssigen Befestigung einer Probe im Probenbereich dienen. Denkbar wäre auch die Befestigung der Proben auf einem separaten Probetablett (nicht gezeigt), welches dann mit den besagten Nuten kraftschlüssig mit der Bodentraverse 10 verbunden werden kann. Die Bodentraverse 10 ist starr mit den Trägern 3 verbunden. Träger 3, 3' sowie die Bodentraverse 10 können aus Stahl gefertigt sein, bevorzugt aus einem Edelstahl. Die Träger 3, 3' sind als Profile ausgestaltet, was zusätzlich die Stabilität erhöht bei gleichzeitig geringerem Materialaufwand und Gewicht. Die Bodentraverse 10 kann mittels einer Verschraubung mit den Trägern 3, 3' starr verbunden sein. Von der Bodentraverse 10 nach oben wird der Probenbereich 2 durch eine Mitteltraverse 11 begrenzt. Insgesamt wird der Probenbereich 2 somit als insgesamt rechteckförmiges Volumen durch vier Kanten der Testapparatur 1 begrenzt. Von unten wird der Probenbereich 2 durch die Bodentraverse 10 begrenzt. Von oben wird der Probenbereich 2 durch die Unterseite der Mitteltraverse 11 begrenzt. Zwei Seitenwände des Probenbereichs werden durch die Träger 3, 3' anteilsmässig bezüglich ihrer Längenausdehnung definiert. Der somit gebildete Probenbereich 2 ist auf zwei gegenüberliegenden Seiten hin offen. Die Mitteltraverse 11 ist ebenfalls starr mit den Trägern 3, 3' verbunden.

Auf der Mitteltraverse 11 sind zwei Linearantriebe 4, 4' ebenfalls starr angebracht. Die Linearantriebe 4, 4' sind so ausgerichtet, dass sie eine in einem rechten Winkel zur Mitteltraverse 11 verlaufende translatorische Bewegung ihrer Antriebskolben 4.1, 4.1' ermöglichen. Die Antriebskolben 4.1, 4.1' sind mittels einer Brücke 7 miteinander wirkverbunden. Im Betrieb könnten die Linearantriebe synchron ihre translatorische Bewegung durchführen und somit eine Translation der parallel zur Mitteltraverse 11 ausgerichteten Brücke 7 ermöglichen. Die Brücke 7 überträgt die Bewegung auf den Zylinder 6, welcher sich durch eine Ausnehmung der Mitteltraverse 11 und ein entsprechendes in diese Ausnehmung eingepasstes Mitteltraversenlager 11.1 in den Probenbereich 2 erstreckt. Der Zylinder 6 ist mit einer Kupplung auf der Brücke 7 ausgestattet, welche wiederum eine nach oben fortführende Erstreckung des Zylinders 6 mit einem Rotationsantrieb 5 koppelt. Dieser Rotationsantrieb 5 ist so ausgestaltet, dass er ein Drehmoment auf den Zylinder 6 zu übertragen vermag.

Der Rotationsantrieb 5 ruht auf einer Traverse 13, welche ihrerseits starr mit den Trägern 3, 3' verbunden ist. Das Drehmoment wird über den Rotationsantrieb 5 durch eine Ausnehmung der Traverse 13 auf den Zylinder 6 übertragen. Wobei eine Lagerung in der Traverse 13 die Erstreckung des Zylinders 6 entsprechend lagert (nicht gezeigt). Die Traverse 13 begrenzt somit gegen oben einen weiteren Antriebsraum 12 der Testapparatur 1. Insgesamt können die Träger 3, 3' mitsamt der Bodentraverse 10, der Mitteltraverse 11 und der Traverse 13 als Bestandteile des Lastrahmens angesehen werden.

Eine entsprechende Frontansicht der Testapparatur 1 aus der Fig. 1 a ist in der Fig. 1 b dargestellt. Der Probenbereich wird einerseits durch die Bodentraverse 10 und die Unterseite der Mitteltraverse 11 begrenzt, wie auch durch die entsprechenden Innenwände 3.1, 3.1' der Träger 3, 3'. Diese Innenwände 3.1, 3.1' können mit einer entsprechenden Verkleidung ausgestattet sein. Auch wäre es denkbar, den Innenraum mit einer Isolation zu versehen, um thermische Stabilität für den Innenraum zu ermöglichen. Ebenfalls denkbar wäre es, den Innenraum so auszugestalten, dass er sich gasdicht gegen aussen abdichten lässt. Dazu könnte z. B. rund um den Probenbereich 2 eine Gummilippe angebracht werden, die mit einer nicht gezeigten Verkleidung den Probenbereich verschliessbar ausgestaltet. Auf der Mitteltraverse 11 sind die beiden Linearantriebe 4, 4' angebracht, bei welchen es sich im vorliegenden Beispiel um servo-elektrische Linearmotoren handelt. Diese bewegen ihre entsprechenden Antriebskolben 4, 4' translatorisch entlang ihrer Längenausdehnung. Die Antriebskolben 4.1, 4.1' sind über eine Brücke 7 miteinander verbunden, welche wiederum die translatorische Bewegung der Linearantriebe 4, 4' auf den Zylinder 6 überträgt, welcher sich durch eine Ausnehmung der Mitteltraverse 11 in den Probenbereich 2 erstreckt. Der Zylinder verfügt weiter über eine Zylindererstreckung 6.1, welche sich durch die Brücke 7 über eine Kupplung 8 in einen oberhalb angeordneten Rotationsantrieb 5 erstreckt, welcher dieser Zylindererstreckung 6.1 ein entsprechendes Drehmoment aufzuerlegen vermag.

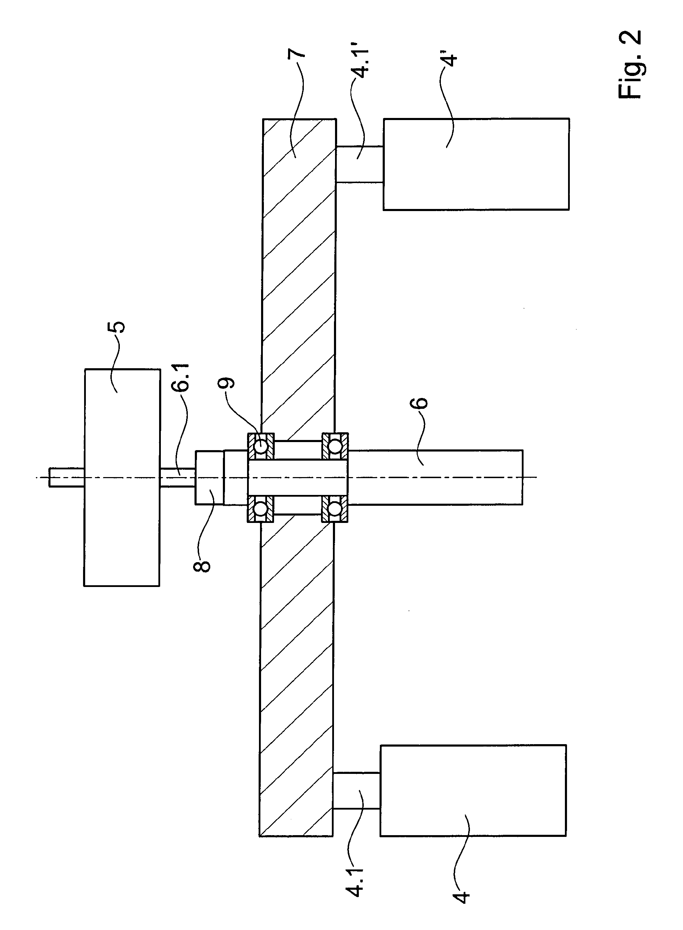

In der Fig. 2 ist der Teilbereich mit der Brücke 7 nochmals detaillierter gezeigt. Die Linearantriebe 4, 4' betreiben die Antriebskolben 4.1 resp. 4.1' in einer translatorischen Bewegung entlang ihrer Längsachse, welche rechtwinklig zur Längsachse und Ausdehnung der Brücke 7 verläuft. Durch die Brücke 7 verläuft eine Ausnehmung mit einem Kugellager 9. Durch diese Ausnehmung mit Kugellager 9 erstreckt sich der Zylinder 6 über eine Kupplung 8 in eine Zylindererstreckung 6.1, welche wirkverbunden ist mit einem Rotationsantrieb 5.

### Beispiel 1

Im Vorliegenden Beispiel wird konkret ein Wirbelsäulenimplantat getestet:

In diesem Beispiel wird eine Testapparatur wie in der Fig. 1 dargestellt verwendet, um ein medizinisch-orthopädisches Implantat intensiv mechanisch zu testen. Dabei wird vom Zylinder zuerst durch eine translatorische Verschiebung der Linearantriebe des servo-elektrischen Lastrahmens eine kontinuierlich zunehmende Anpresskraft von bis zu 4'000 N auf das Probenstück aufgebaut, wobei die Vorrichtung durchaus dafür ausgelegt sein kann, Kräfte von zwischen 500 - 5'000 N aufzutragen.

Dazu wird das Implantat im Probenbereich auf einem Probenträger fixiert, so dass das Implantat relativ zum Lastrahmen der Testapparatur starr ist. Das Implantat wird unter Approximation physiologischer Bedingungen in physiologischer Kochsalzlösung und bei 36.7 ° Celsius getestet. Die Ausrichtung des Implantats entspricht seiner Position im Körper bei einer aufrechten Haltung.

Anschliessend wird der Zylinder in die physiologische Kochsalzlösung getaucht und mit dem Implantat verbunden, so dass die lineare Kraft als Kompression/Dekompression auf das Implantat einwirken kann.

Simultan oder zeitlich versetzt kann über den Rotationsantrieb über den Zylinder ein axiales Drehmoment auf das Implantat übertragen werden - auch hier sowohl in rechtswie auch linkdrehender Richtung. Durch Verschieben der Ausrichtung des Implantats im Probenraum können unterschiedliche kinetische Effekte aus verschiedenen Freiheitsgraden getestet werden.

### Beispiel 2: Bisegmentales Sabilisierungsimplantat

Getestet werden unter gleichen Bedingungen wie oben Torsionskräfte bei maximaler Belastung mit stetig schrittweiser Zunahme des Drehmoments um 4.0 Nm bei einer axialen Vorlast von 150N. Dieser Test kann in zwei Drehrichtungen durchgeführt werden.

Gemessen wird eine Flexion, Extension, Seitneigung oder Torsion des Implantats in Graden.

Dieses Verfahren kann sowohl zum Testen von Stabilisierungsimplantaten, als auch Wirbelkörperersatzimplantaten verwendet werden.

### Beispiel 3: Testverfahren einer Implantat - Schraube

Die erfindungsgemässe Testapparatur ist besonders geeignet, um Implantat-Schrauben unter physiologischen Bedingungen zu testen.

Dazu wird ein Testaufbau wie im Beispiel 1 beschrieben aufgebaut und unter Vorlast eine Knochenschraube über mehrere Umdrehungen in einen Probenkörper eingedreht.

## Patentansprüche

1. Testapparatur (1) zum Prüfen einer Probe durch mechanische Einwirkung auf die Probe, umfassend
a) einen Probenbereich (2) innerhalb eines Lastrahmens (3);
b) mindestens einen Linearantrieb (4, 4'), welcher ausserhalb des Probenbereichs (2) angeordnet ist;
c) einen Rotationsantrieb (5), welcher ausserhalb des Probenbereichs (2) angeordnet ist;
d) einen Zylinder (6), welcher relativ zum Probenbereich (2) entlang seiner Längsachse mittels des mindestens einen Linearantriebs (4, 4') linear und beweglich ist, und mittels des Rotationsantriebs (5) um seine Längsachse rotierbar beweglich ist, und wobei sich der Zylinder (6) von ausserhalb des Probenbereichs (2) in den Probenbereich (2) erstreckt und dabei durch den Lastrahmen (3) geführt wird.

2. Testapparatur (1) nach Anspruch 1, wobei eine Bewegungsachse des mindestens einen Linearantriebes (4, 4') parallel zur Längsachse des Zylinders (25) verläuft.

3. Testapparatur (1) nach einem der Ansprüche 1 oder 2, wobei die Rotationsachse des Zylinders (25) durch die Längsachse desselben verläuft.

4. Testapparatur (1) nach einem der Ansprüche 1 bis 3, wobei mindestens zwei Linearantriebe (4, 4') vorgesehen sind und wobei die mindestens zwei Linearantriebe und der Zylinder (6) durch mindestens eine Brücke (7) miteinander in Wirkverbindung sind, wobei insbesondere der Zylinder (6) durch die Brücke (7) geführt ist.

5. Testapparatur (1) nach einem der Ansprüche 1 - 4, wobei als Linearantrieb (4, 4') elektromagnetische Motoren, insbesondere servo-elektrische Linearmotoren verwendet werden.

6. Testapparatur (1) nach einem der Ansprüche 1 -5, wobei jeder Linearantrieb (4, 4') und der Rotationsantrieb (5) einzeln über je eine Antriebssteuerung gesteuert wird, und insbesondere wobei alle Antriebssteuerungen durch eine gemeinsame Regelung gesteuert werden.

7. Testapparatur (1) nach einem der Ansprüche 1 - 6, wobei der Rotationsantrieb mindestens (5) eine Linearführung umfasst.

8. Testapparatur (1) nach einem der Ansprüche 1 bis 7, weiter umfassend eine Kupplung (8), welche den Zylinder lösbar in Wirkverbindung mit dem Rotationsantrieb (5) zu setzen vermag, insbesondere ist die Kupplung oberhalb der Brücke angeordnet.

9. Testapparatur (1) nach einem der Ansprüche 1 bis 8, wobei sich der Zylinder durch die Brücke erstreckt und diese eine Lagerung, insbesondere eine Kugellagerung (9), umfasst in welcher der Zylinder rotierbar gelagert ist.

10. Testapparatur nach einem der Ansprüche 1 bis 9, umfassend ein, insbesondere auswechselbar ausgestaltetes, Lagermodul am Lastrahmen, durch welchen sich der Zylinder von ausserhalb des Probenbereichs in den Probenbereich erstreckt und durch welchen der Zylinder geführt ist.

11. Testapparatur nach einem der der Ansprüche 1 bis 10, umfassend mindestens ein Sensorsystem welches mit dem Zylinder gekoppelt ist, ausgewählt aus der Gruppe bestehend aus: Dehnmessstreifem, inkrementaler Positionsgeber, kontinuierlicher Positionsgeber, Kraftsensor

12. Testapparatur nach einem der Ansprüche 1 bis 11, weiter umfassend eine Traverse, welche so angeordnet ist, dass sie sich zwischen zwei parallel angeordneten Seitenwänden des Lastrahmens erstreckt und oberhalb der Brücke angeordnet ist, insbesondere wobei die Traverse starr mit dem Lastrahmen verbunden ist.

13. Testapparatur nach Anspruch 12, wobei der Rotationsantrieb mit der Traverse starr verbunden ist.

14. Verfahren zum Prüfen von Proben durch mechanisches Einwirken auf die Probe, insbesondere mittels einer Testapparatur gemäss Anspruch 1, umfassend die Schritte:
a) Einbringen der zu prüfenden Probe in einen Probenbereich einer Testapparatur;
b) Kraftschlüssiges Verbinden der Probe mit einem starren Lastrahmen der Testapparatur;
c) Kraftschlüssiges Verbinden der Probe mit einem rotierbaren und in Längsachse verschiebbaren Zylinder der Testapparatur, und
d) Verschieben in der Längsachse des Zylinders und/oder rotieren des Zylinders um die Längsachse desselben zur Ausübung einer mechanischen Kraft auf die Probe.

15. Verfahren gemäss Anspruch 14, wobei der Zylinder durch ein Kugellager von ausserhalb des Lastrahmens in den Probenbereich geführt ist und weiter umfassend den Schritt:
e) Kopplung eines Drehmoments von einem Rotationsantrieb auf den Zylinder um diesen um seine Längsachse zu rotieren.
